# FASCICULE DE BREVET EUROPEEN

(11) **EP 3 269 994 B1**
(45) Date de publication et mention de la délivrance du brevet: **18.09.2019**
(21) Numéro de dépôt: 17180810.8
(22) Date de dépôt: 11.07.2017
(51) Int. Cl.: F16D 55/40, F03C 1/00, F16D 65/853

(54) **SYSTEME DE FREINAGE AMELIORE POUR MACHINE HYDRAULIQUE**
VERBESSERTES BREMSSYSTEM FÜR HYDRAULISCHE MASCHINE
IMPROVED BRAKING SYSTEM FOR HYDRAULIC MACHINE

(30) Priorité: 13.07.2016 FR 1656754
(43) Date de publication de la demande: 17.01.2018
(73) Titulaire: Poclain Hydraulics Industrie, 60410 Verberie (FR)
(72) Inventeur: ENGRAND, Julien, 60410 Verberie (FR); RAISIN, Jean-Philippe, 60410 Verberie (FR); VIDAL, Stéphane, 60410 Verberie (FR); ULMER, Aurélien, 60410 Verberie (FR); COSTAZ, Dominique, 60410 Verberie (FR)
(74) Mandataire: Gilbey, Vincent

(56) Documents cités:
- EP-A1- 1 072 814
- US-A1- 2015 007 556

## Description

### DOMAINE TECHNIQUE GENERAL

La présente invention concerne le domaine des machines hydrauliques, et plus précisément les freins d'appareils hydrauliques.

### ETAT DE L'ART

Les systèmes hydrauliques tels que les moteurs et pompes hydrauliques, que l'on désigne par l'appellation de machine hydraulique, sont communément disposés dans un carter qui nécessite d'être relié à un orifice de drain afin de prévenir d'éventuelles montées en pression au sein du carter, pouvant par exemple découler de fuites hydrauliques internes à la machine hydraulique. La machine hydraulique doit aussi être refroidie. De telles machines hydrauliques comprennent par ailleurs usuellement un système de freinage, qui doit également être refroidi lors du fonctionnement.

Par machine hydraulique, on entend un moteur ou une pompe hydraulique, une telle machine étant réversible.

Afin d'assurer ces fonctions de refroidissement, un flux d'huile est typiquement injecté dans le carter de la machine hydraulique pour refroidir le système de freinage, ce dernier étant typiquement soumis à de fortes variations de températures en raison des frottements s'appliquant lors du freinage. Cette huile est ensuite redirigée vers la machine hydraulique pour la refroidir et s'évacuer à l'aide de l'orifice de drainage du carter moteur.

Le document EP 1 072 814 A1 montre un système de freinage d'un rotor par rapport à un stator comprenant un circuit de refroidissement.

De tels systèmes sont toutefois peu satisfaisants en termes de performances. En effet, bien que le système de freinage soit refroidi de manière efficace, la machine hydraulique reçoit pour sa part un apport en calories par l'huile provenant du système de freinage, dégradant ainsi le rendement de la machine hydraulique.

Afin de répondre à cette problématique, il a été envisagé de dissocier les circuits de refroidissement du système de freinage et celui de refroidissement/drainage la machine hydraulique. Une telle solution conduisant cependant à une structure trop complexe et volumineuse, et s'avère donc peut exploitable industriellement, ce type de montage nécessitant notamment un nombre plus important de raccord hydraulique.

La présente invention vise ainsi à répondre au moins partiellement à ces problématiques.

### PRESENTATION DE L'INVENTION

A cet effet, la présente invention propose un système hydraulique comprenant un carter dans lequel sont disposés une machine hydraulique, un arbre engagé dans le carter et monté en rotation relative par rapport au carter au moyen d'un palier comprenant au moins deux éléments de roulement, un système de freinage comprenant une pluralité de disques de freinage configurés pour sélectivement immobiliser en rotation l'arbre par rapport au carter et un système de pilotage desdits disques de freinage, le système hydraulique comprenant un système d'irrigation adapté pour sélectivement refroidir lesdits disques de freinage au moyen d'un fluide, le système d'irrigation comprenant une admission et un refoulement de fluide, caractérisé en ce que l'admission et le refoulement de fluide du système d'irrigation définissent un écoulement de fluide au sein du carter dans lequel le système de freinage est en aval de la machine hydraulique.

Selon un exemple, la machine hydraulique est disposée dans un premier volume interne du carter, et le système de freinage est disposé dans un second volume interne du carter délimité par deux éléments de roulement du palier, l'admission en fluide du système d'irrigation étant disposée dans le premier volume interne du carter et le refoulement en fluide du système d'irrigation étant disposé dans le second volume interne du carter.

Selon un exemple, le refoulement de fluide du système d'irrigation est relié au volume interne du carter via un canal aménagé dans le système de freinage.

Le système de pilotage du système de freinage comprend ainsi typiquement au moins un piston configuré pour appliquer un effort de serrage sur les disques de freinage, ledit piston comprenant un perçage de manière à générer un passage du fluide du système d'irrigation depuis le volume interne du carter vers le refoulement de fluide.

Selon un exemple, ledit perçage est muni d'un clapet taré, configuré de manière à ne permettre un passage de fluide vers le refoulement de fluide que lorsque la pression au sein du volume interne du carter dépasse une valeur seuil.

Selon un exemple, le carter comprend une gorge configurée de manière à permettre un passage de fluide vers le refoulement de fluide via le perçage et une rainure lorsque l'épaisseur totale d'une pile formée par les disques de freinage passe sous une valeur seuil.

Selon un exemple, tout ou partie des disques de freinage sont munis de garnitures qui présentent des évidements formant des passages de fluide du système d'irrigation depuis le volume interne du carter vers le refoulement de fluide.

Selon un exemple, tout ou partie des disques de freinage présentent des garnitures formées de secteurs disjoints, de manière à former des portions dépourvues de garniture et formant ainsi des passages pour le fluide entre deux disques de freinage adjacents.

Selon un exemple, le système comprend un capteur de pression au sein du carter, configuré pour déterminer la pression du fluide du système d'irrigation au sein du carter.

Le capteur de pression est typiquement configuré pour délivrer un signal lorsque la pression au sein du carter dépasse une valeur seuil.

Le capteur de pression est par exemple disposé au sein d'un volume interne du carter comprenant la machine hydraulique.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 présente une vue schématique en coupe d'un système selon un aspect de l'invention,
- Les figures 2 et 3 présentent deux modes de réalisation de disques de freinage d'un tel système, et
- Les figures 4 et 5 présentent deux vues de variantes d'un tel système.

Sur l'ensemble des figures, les éléments en commun sont repérés par des références numériques identiques.

### DESCRIPTION DETAILLEE

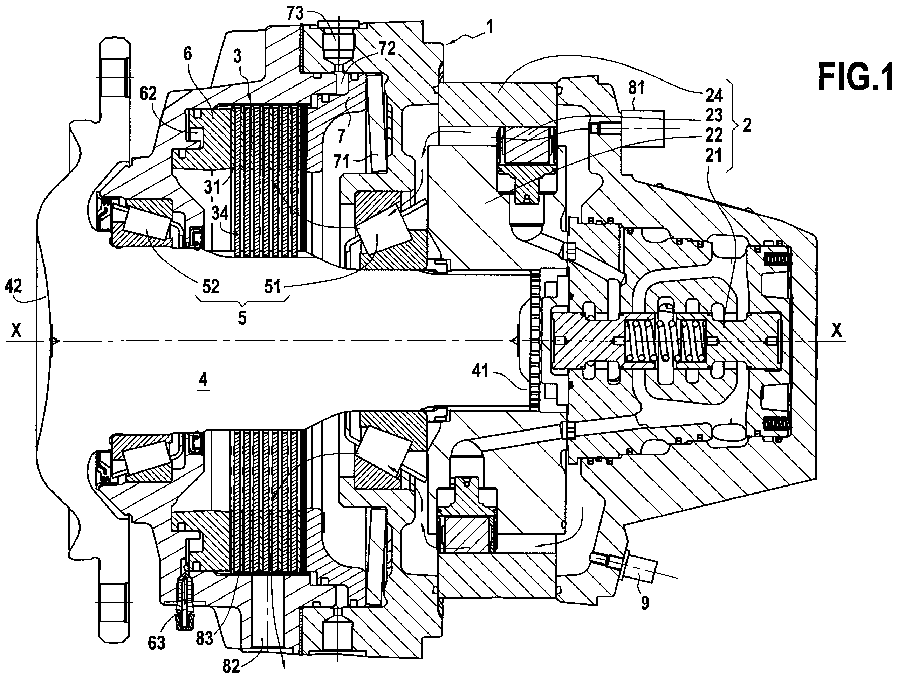

La figure 1 représente une vue schématique en coupe d'un ensemble selon un aspect de l'invention.

On représente sur cette figure un ensemble comprenant un carter 1 dans lequel sont disposée une machine hydraulique 2 et un système de freinage 3.

Un arbre 4 est engagé dans le carter 1, et est relié au carter via un palier 5 comprenant deux éléments de roulement. Cet arbre 4 définit un axe de rotation s'étendant selon une direction longitudinale X-X. On définit une extrémité proximale 41 et une extrémité distale 42 de l'arbre 4, l'extrémité proximale étant la plus proche de la machine hydraulique 2.

Le carter 1 tel que représenté comprend un premier volume interne dans lequel est logée la machine hydraulique 2.

Cette machine hydraulique 2 est ici une machine hydraulique à pistons radiaux, comprenant un distributeur 21, un bloc cylindres 22 dans lequel sont disposés des pistons 23 disposés en regard d'une came multilobes 24. Cette came multilobes 24 est ici formée par une portion du carter 1. Le bloc cylindres 22 est monté fixe par rapport à l'arbre 4, de sorte que ces deux éléments 22 et 4 soient liés en rotation, par exemple au moyens de cannelures. Le distributeur 21 est positionné dans le prolongement de l'extrémité proximale 41 de l'arbre 4.

Dans le mode de réalisation représentée, la machine hydraulique est à arbre tournant et came fixe. En variante, la machine peut être à came tournante et arbre fixe.

La structure d'une telle machine hydraulique est bien connue, et ne sera pas décrite plus en détail par la suite.

Plus généralement, dans le présent exposé, on entend par machine hydraulique la partie réalisant la transformation de l'énergie mécanique en énergie hydraulique, ou inversement. Dans le cas d'une machine hydraulique à pistons radiaux, cela comprend donc le bloc cylindres, les pistons et la came multilobes. Dans le cas d'une machine hydraulique à pistons axiaux, cela comprend donc le bloc cylindres, les pistons, et un plateau, typiquement à inclinaison variable.

Le palier 5 comprend deux éléments de roulement 51 et 52, ici deux roulements à rouleaux coniques espacés l'un par rapport à l'autre selon la direction longitudinale de l'arbre 4. L'élément de roulement 51 est ainsi qualifié d'élément de roulement proximal 51, tandis que l'élément de roulement 52 est qualifié d'élément de roulement distal 52. L'espacement entre les éléments de roulement 51 et 52 définit un second volume interne du carter 1, dans lequel est disposé le système de freinage 3.

Le système de freinage 3 comprend une pluralité de disques de freinage 31 solidaires du carter 1, et une pluralité de disques de freinage 34 solidaires de l'arbre 4, notamment par des cannelures ou rainures. Ces disques de freinage 31 et 34 forment ainsi une pile de disques de freinage.

Le système de freinage comprend également deux commandes de freinage 6 et 7, configurés de manière à sélectivement appliquer un effort de compression sur les disques de freinage 31 et 32 afin de piloter un verrouillage du mouvement de rotation relatif de l'arbre 4 par rapport au carter 1.

Dans l'exemple représenté, les deux commandes de freinage 6 et 7 sont deux pistons antagonistes, disposés de part et d'autre des disques de freinage 31 et 34.

Ces deux pistons 6 et 7 sont chacun pilotés par une chambre de mise en pression reliée à des conduits d'alimentation en pression, et formés d'une pièce mobile en translation selon la direction longitudinale X-X et adaptée pour venir appliquer un effort de compression sur la pile de disques de freinage. Les disques de freinage 31 et 34 entrainent alors un verrouillage du mouvement de rotation relatif de l'arbre 4 par rapport au carter 1 du fait des forces de frottement entre les disques de freinage 31 et 34.

Dans l'exemple représenté, le piston 6 forme par exemple un frein de service, tandis que le piston 7 forme un frein de parking. Le frein de parking est typiquement un frein appliquant par défaut un effort de freinage, et dont l'action est neutralisée lors de la mise en service du système.

Dans l'exemple illustré, le piston 7 est couplé à une rondelle 71 tendant à appliquer le piston 7 contre la pile de disques de freinage et tendant donc à appliquer un effort de freinage. Une chambre 72 du frein de parking est reliée à un conduit d'alimentation en pression 73, la montée en pression dans cette chambre 72 tendant à s'opposer à l'effort exercé par la rondelle 71 et donc à déplacer le piston 7 de manière à l'écarter de la pile de disques de freinage.

A l'inverse, le frein de service formé par le piston 6 comprend une chambre de service 62 configurée de manière à ce qu'une montée en pression au sein de cette chambre de service 62 entraine l'application d'un effort de freinage sur la pile de disques de freinage via le piston 6. La chambre de service 62 est ainsi reliée à un conduit d'alimentation en pression 63. Ce frein de service peut être piloté suite à l'actionnement d'une commande de frein de la part de l'utilisateur.

Comme mentionné au préalable, la machine hydraulique 2 nécessite une évacuation et aussi un refroidissement et le système de freinage 3 nécessite un refroidissement en fonctionnement. Les frottements entre les disques du système de freinage 3 peuvent notamment entrainer une élévation importante de température, et nécessitent un refroidissement performant afin d'assurer un bon fonctionnement du système de freinage 3.

Afin d'assurer un tel refroidissement, le système tel que présenté comprend un système d'irrigation adapté pour réaliser une circulation de fluide, par exemple de l'huile, dans le carter 1, et ainsi réaliser à la fois une fonction de refroidissement du système de freinage 3 et de refroidissement et d'évacuation d'huile de la machine hydraulique 2.

Le système d'irrigation comprend une alimentation 81 et un refoulement 82, adaptés pour respectivement injecter du fluide dans le carter 1 et extraire du fluide du carter 1.

Comme représenté schématiquement sur la figure 1, l'alimentation 81 et le refoulement 82 sont aménagés dans le carter 1, de sorte que l'alimentation 81 injecte du fluide dans un premier volume interne du carter 1 comprenant la machine hydraulique 2, tandis que le refoulement 82 prélève du fluide dans un second volume interne du carter 1 comprenant le système de freinage 3, ces deux volumes internes étant séparés par l'élément de roulement proximal 51 du palier 5. On comprend bien que l'élément de roulement proximal 51 ne réalise pas une séparation étanche entre les deux volumes internes du carter 1, et qu'un passage de fluide est donc possible entre le premier volume interne du carter 1 et le second volume interne du carter 1.

Cette configuration du système d'irrigation, et plus précisément, l'emplacement de l'alimentation 81 et du refoulement 82 du système d'irrigation permet de définir un sens de circulation du fluide au sein du carter 1, qui passe dans un premier temps par la machine hydraulique 2, puis traverse l'élément de roulement proximal 51 pour atteindre le système de freinage 3 avant d'être évacué du carter 1 par le refoulement 82. On indique ainsi schématiquement sur la figure 1 le sens de circulation du fluide au sein du carter 1 à l'aide de flèches.

Le fluide, par exemple de l'huile, peut alors être recyclée en passant par un système de filtrage et/ou de refroidissement avant d'être réinjectée via l'alimentation 81.

Le refoulement 82 est représenté ici sur un coté radialement opposé à celui de l'alimentation 81, c'est-dire avec un déphase de 180° par rapport à l'axe X-X de la machine. En variante le refoulement 82 peut se trouver du même côté (déphasage nul) que l'alimentation 81. Tout autre déphasage peut être envisagé sans sortir du cadre de l'invention.

Les besoins de la machine hydraulique 2 et du système de freinage 3 sont distincts ; la machine hydraulique 2 nécessite une évacuation d'huile et un refroidissement lors de son fonctionnement, , tandis que le système de freinage nécessite quant à lui une dissipation thermique importante.

Cette configuration du système d'irrigation permet donc de réaliser dans un premier temps l'évacuation d'huile et le refroidissement de la machine hydraulique 2, puis dans un second temps le refroidissement du système de freinage 3.

De cette manière, le fluide traversant la machine hydraulique 2 a une température qui peut être contrôlée, et qui n'est pas chargé de calories provenant du système de freinage 3. Le rendement de la machine hydraulique n'est ainsi pas dégradé.

Un tel fonctionnement est avantageux par rapport aux systèmes d'irrigation conventionnels dans lesquels le fluide est injecté de manière à refroidir dans un premier temps le système de freinage puis la machine hydraulique, ce qui entraine une dégradation des performances de la machine hydraulique à laquelle des calories sont transmises par le fluide qui a au préalable refroidi le système de freinage.

On comprend que pour atteindre le refoulement 82 du système d'irrigation, le fluide doit donc traverser le système de freinage 3.

Or, il a été constaté qu'en cas de freinage, et donc dans le cas où les disques de freinage 31 et 34 de la pile de disque du système de freinage 3 sont serrés les uns contre les autres, notamment lorsque la garniture des disques de frein est usée, il existe un risque que l'échappement du fluide du système d'irrigation ne s'effectue pas correctement, ce qui entraine une montée en pression au sein du carter 1, qui est préjudiciable au bon fonctionnement de la machine hydraulique 2.

Pour ce faire, les disques de freinage 31 et 34 sont typiquement munis de garnitures présentant des rainures aménagés sur les surfaces latérales des disques de freinage, formant ainsi des conduits pour le passage du fluide.

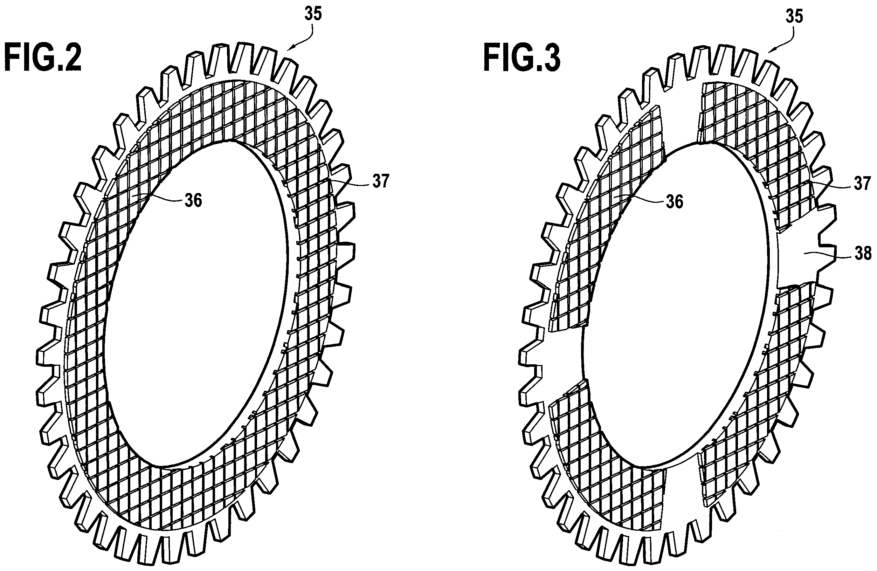

On représente ainsi sur la figure 2 un exemple de disque de freinage 35 muni d'une telle garniture 36, qui présente ici des rainures 37 formant un quadrillage et définissant ainsi une pluralité de conduits pour permettre le passage de fluide au travers d'une pile de disques de freinage. Tout ou partie des disques de freinage liés au carter 1 ou liés à l'arbre 4 peuvent ainsi présenter une telle garniture 36. En variante la garniture 36 peut comprendre des conduits radiaux, ou en forme d'arc de cercle débouchant aux extrémités radiales interne et externe de la garniture 36 pour permettre au flux de fluide de s'écouler radialement vers le refoulement 82 lors du freinage.

On représente sur la figure 3 un autre exemple de disque de freinage 35 dans lequel la garniture 36 est réalisée en segments disjoints, de manière à former des portions 38 dépourvues de garniture et formant ainsi des passages pour le fluide entre deux disques adjacents. Tout ou partie des disques de freinage liés au carter 1 ou liés à l'arbre 4 peuvent ainsi présenter une telle garniture 36. Les portions de garniture 36 peuvent de plus être munies de rainures 37 comme représenté précédemment en référence à la figure 2.

Les différents modes de réalisation de disques de freinage présentés en référence aux figures 2 et 3 peuvent être utilisés séparément ou être associés au sein d'un même système de freinage 3.

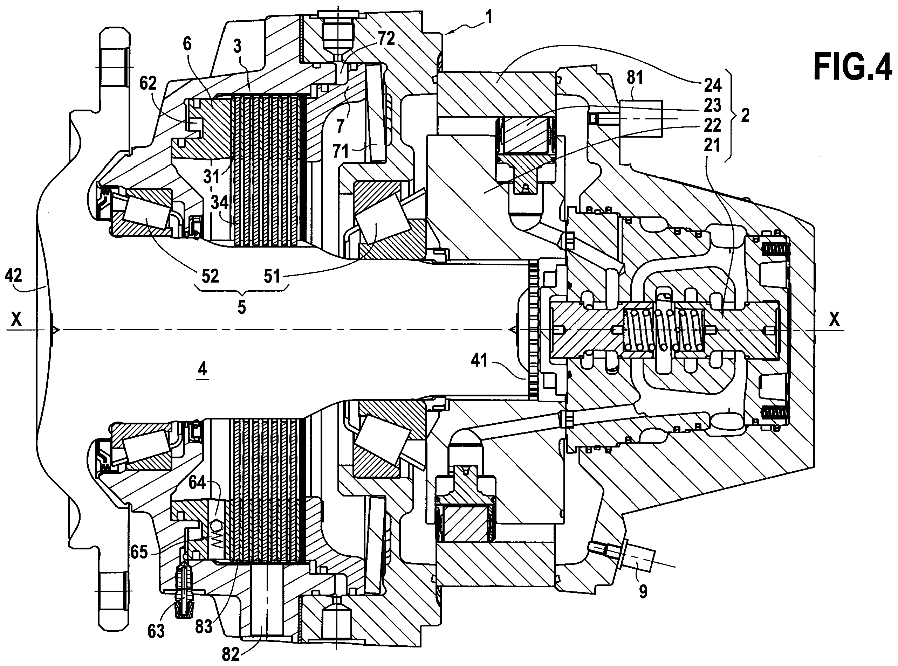

La figure 4 présente une vue en coupe d'un autre mode de réalisation permettant de s'assurer de la bonne circulation du fluide du circuit d'irrigation même dans le cas où les disques de freinage sont serrés.

Dans ce mode de réalisation, un perçage 64 est réalisé dans le piston 6 du frein de service. Ce perçage relie le volume interne du carter 1 au refoulement 82 du système d'irrigation, par exemple via une rainure 83 aménagée dans le carter 1. La chambre 62 associée au piston 6 est quant à elle isolée de ce perçage 64.

Le perçage 64 aménagé dans le piston 6 est typiquement muni d'un clapet anti retour taré 65, adapté pour n'autoriser le passage de fluide que depuis le volume interne du carter vers le refoulement 82, et uniquement lorsque la pression au sein du volume interne du carter 1 dépasse une valeur seuil. En variante ou en complément, ce perçage 64 peut être de faible diamètre, de sorte à fonctionner comme une restriction hydraulique.

Selon une variante non représentée sur les figures, un perçage est réalisé dans le piston 7 du frein de parking. Le fonctionnement est alors similaire au fonctionnement déjà décrit en référence à la figure 4 ; ce perçage est relié au refoulement 82 du système d'irrigation via une rainure 83 aménagée dans le carter 1. La chambre 72 associée au piston 7 est quant à elle isolée de ce perçage.

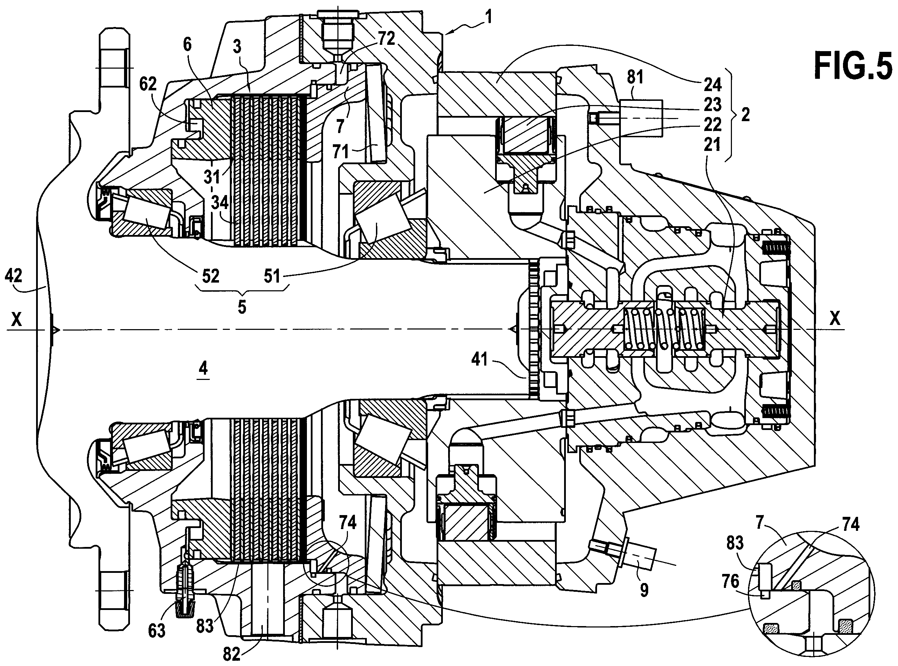

Le perçage aménagé dans le piston 7 est typiquement muni d'un clapet anti retour taré (non représenté sur la figure 5), adapté pour n'autoriser le passage de fluide que depuis le volume interne du carter vers le refoulement 82, et uniquement lorsque la pression au sein du volume interne du carter 1 dépasse une valeur seuil. En variante ou en complément, ce perçage peut être de faible diamètre, de sorte à fonctionner comme une restriction hydraulique.

La figure 5 illustre un mode de réalisation particulier de cette variante, dans lequel e perçage 74 réalisé dans le piston 7 du frein de parking est relié à la rainure 83 via une gorge 76 aménagée dans le carter 1.

Cette gorge 76 est aménagée dans le carter 1 de manière à n'être en communication fluidique avec le perçage 74 que lorsque le piston 7 est dans une configuration donnée.

Plus précisément, en considérant le mode de réalisation représenté sur la figure 5, la gorge 76 n'est reliée fluidiquement avec le perçage 74 que lorsque le piston 7 dépasse une position donnée dans son déplacement vers les disques de freinage 31 et 34. Or, le déplacement du piston 7 dans ce sens résulte notamment de l'usure des disques de freinages 31 et 34. En effet l'usure des disques de freinage va diminuer l'épaisseur des garnitures des disques de freinage, et donc l'épaisseur totale d'une pile formée par les disques de freinage 31 et 34. Par conséquent, en position de freinage le piston 7 se trouvera à une position axialement décalée par rapport à une position équivalente avec des disques de freinage « neufs ».

Or l'usure de ces disques de freinage, c'est-à-dire l'usure des garnitures des disques de freinage, a pour effet de diminuer la section des conduits de passage du fluide aménagés dans les garnitures des disques de freinage , ce qui a pour effet d'augmenter la pression au sein du volume interne du carter 1.

De plus, ce mode de réalisation permet de créer une progressivité de répartition des flux entre le flux passant par les disques de freinage 31 et 34 et le flux passant par le perçage 74. En effet le déplacement progressif du piston 7 en direction de la pile de disques de freinage va faire augmenter progressivement la section de passage entre le perçage 74 et la gorge 76, augmentant ainsi progressivement le flux de fluide passant par le perçage 74 pour atteindre le refoulement 82.

A titre d'exemple, la gorge 76 et le perçage 74 peuvent être réalisés de manière à n'être en communication fluidique que lorsque les disques de freinage 31 et 34 atteignent un certain niveau d'usure, à partir duquel les passages de fluide aménagés sur les disques de freinage (comme décrit par exemple précédemment en référence aux figures 2 et 3) n'assurent plus un débit de fluide suffisant.

Ces différents modes de réalisation présentés sur les figures 2 à 5 permettent ainsi d'assurer une bonne circulation du fluide du circuit d'irrigation même dans le cas où les disques de freinage sont usés, et donc d'éviter une montée en pression au sein du carter 1.

Ces différents modes de réalisation présentés sur les figures 2 à 5 peuvent être combinés au sein d'un même système, ou utilisés isolément.

Le carter 1 est typiquement muni d'un capteur de pression 9 tel qu'un manocontact de pression d'huile disposé dans son volume interne, par exemple dans le volume interne du carter 1 contenant la machine hydraulique 2.

Ce capteur de pression 9 est par exemple positionné dans un orifice dédié du carter 1, au niveau de la partie distributeur, comme représenté schématiquement sur la figure 1.

Le capteur de pression 9 est sensible à la pression au sein du volume interne du carter 1, et donc la pression du fluide du système d'irrigation au sein du volume interne du carter 1.

Un tel capteur de pression 9 permet de s'assurer du bon fonctionnement du système d'irrigation, et ainsi d'éviter une surpression au sein du carter 1.

Un tel capteur de pression trouve un intérêt particulier dans le cas où le passage du fluide du système d'irrigation au travers du système de freinage est assuré par des garnitures munies de canaux comme déjà décrit par exemple en référence aux figures 2 et 3.

En effet, dans de tels modes de réalisation, on comprend que l'usure des garnitures 36 entraine une diminution de la section des canaux formés par les rainures 37 et donc une possible montée en pression au sein du volume interne du carter1.

Le capteur de pression 9 positionné en amont du système de freinage dans le sens de l'écoulement du fluide du système d'irrigation permet de détecter une telle montée en pression au sein du volume interne du carter 1, et peut donc réaliser une fonction de détection ou de surveillance de l'usure des garnitures 36 des disques de freinage.

Le capteur de pression 9 peut ainsi être configuré de manière à délivrer un signal à l'utilisateur lorsque la pression au sein du volume interne du carter 1 dépasse une valeur seuil de pression, ce qui indique alors à l'utilisateur que les garnitures 36 des disques de freinage doivent être remplacées. La valeur seuil de pression est par exemple choisie comme étant une valeur de pression correspondant à une usure des disques de freinage 31 et 34 déterminée de manière à assurer un fonctionnement du frein de parking, c'est-à-dire une usure des disques de freinage 31 et 34 inférieure à l'usure des disques de freinage pour laquelle le piston 6 de frein de parking vient en butée contre un épaulement du carter et donc entraine une perte de la fonction de frein de parking.

Un tel capteur de pression 9 peut également présenter un intérêt pour d'autres modes de réalisation, en permettant de manière plus générale de détecter un défaut dans le refoulement du fluide du système d'irrigation.

## Revendications

1. Système hydraulique comprenant un carter (1) dans lequel sont disposés une machine hydraulique (2), un arbre (4) engagé dans le carter (1) et monté en rotation relative par rapport au carter (1) au moyen d'un palier (5) comprenant au moins deux éléments de roulement (51, 52), un système de freinage (3) comprenant une pluralité de disques de freinage (31, 34) configurés pour sélectivement immobiliser en rotation l'arbre (4) par rapport au carter (1) et un système de pilotage (6, 7) desdits disques de freinage (31, 34), le système hydraulique comprenant un système d'irrigation adapté pour refroidir lesdits disques de freinage (31,34) au moyen d'un fluide, le système d'irrigation comprenant une admission (81) et un refoulement (82) de fluide,
**caractérisé en ce que** l'admission (81) et le refoulement (82) de fluide du système d'irrigation définissent un écoulement de fluide au sein du carter dans lequel le système de freinage (3) est en aval de la machine hydraulique (2).

2. Système selon la revendication 1, dans lequel la machine hydraulique (2) est disposée dans un premier volume interne du carter (1), et le système de freinage (3) est disposé dans un second volume interne du carter (1) délimité par deux éléments de roulement (51, 52) du palier (5), l'admission (81) en fluide du système d'irrigation étant disposée dans le premier volume interne du carter (1) et le refoulement (82) en fluide du système d'irrigation étant disposé dans le second volume interne du carter (1).

3. Système selon l'une des revendications 1 ou 2, dans lequel le refoulement (82) de fluide du système d'irrigation est relié au volume interne du carter (1) via un canal aménagé dans le système de freinage (3).

4. Système selon la revendication 3, dans lequel le système de pilotage du système de freinage comprend au moins un piston (6, 7) configuré pour appliquer un effort de serrage sur les disques de freinage (31, 34), le dit pistons (6, 7) comprenant un perçage (64, 74) de manière à générer un passage du fluide du système d'irrigation depuis le volume interne du carter (1) vers le refoulement (82) de fluide.

5. Système selon la revendication 4, dans lequel ledit perçage (64, 74) est muni d'un clapet taré (75), configuré de manière à ne permettre un passage de fluide vers le refoulement (82) de fluide que lorsque la pression au sein du volume interne du carter (1) dépasse une valeur seuil.

6. Système selon l'une des revendications 4 ou 5, dans lequel le carter (1) comprend une gorge (76) configurée de manière à permettre un passage de fluide vers le refoulement (82) de fluide via le perçage (74) et une rainure (83) lorsque l'épaisseur totale d'une pile formée par les disques de freinage (31, 34) passe sous une valeur seuil.

7. Système selon l'une des revendications 3 à 6, dans lequel tout ou partie des disques de freinage (31, 34) sont munis de garnitures (36) qui présentent des évidements (37) formant des passages de fluide du système d'irrigation depuis le volume interne du carter (1) vers le refoulement (82) de fluide.

8. Système selon l'une des revendications 3 à 7, dans lequel tout ou partie des disques de freinage (31, 34) présentent des garnitures (36) formées de secteurs disjoints, de manière à former des portions (38) dépourvues de garniture et formant ainsi des passages pour le fluide entre deux disques de freinage adjacents.

9. Système selon l'une des revendications 1 à 8, comprenant un capteur de pression (9) au sein du carter, configuré pour déterminer la pression du fluide du système d'irrigation au sein du carter (1).

10. Système selon la revendication 9, dans lequel le capteur de pression (9) est configuré pour délivrer un signal lorsque la pression au sein du carter (1) dépasse une valeur seuil.

11. Système selon l'une des revendications 9 ou 10, dans lequel le capteur de pression (9) est disposé au sein d'un volume interne du carter (1) comprenant la machine hydraulique (2).

## Patentansprüche

1. Hydraulisches System, das ein Gehäuse (1) umfasst, in dem eine hydraulische Maschine (2), eine Welle (4), die in dem Gehäuse (1) in Eingriff ist und in Bezug zu dem Gehäuse (1) mittels eines Lagers (5) drehbar gelagert ist, das mindestens zwei Rollelemente (51, 52) umfasst, ein Bremssystem (3), das mehrere Bremsscheiben (31, 34) umfasst, die dazu ausgestaltet sind, die Drehung der Welle (4) in Bezug zu dem Gehäuse (1) selektiv anzuhalten, und ein System (6, 7) zur Steuerung der Bremsscheiben (31, 34) angeordnet sind, wobei das hydraulische System ein Flüssigkeitskühlungssystem umfasst, das geeignet ist, die Bremsscheiben (31, 34) mittels eines Fluids zu kühlen, wobei das Flüssigkeitskühlungssystem einen Einlass (81) und einen Auslass (82) für Fluid umfasst,
**dadurch gekennzeichnet, dass** der Einlass (81) und der Auslass (82) für Fluid des Flüssigkeitskühlungssystems ein Strömen des Fluids im Inneren des Gehäuses definieren, in dem das Bremssystem (3) sich stromabwärts der hydraulischen Maschine (2) befindet.

2. System nach Anspruch 1, wobei die hydraulische Maschine (2) in einem ersten Innenvolumen des Gehäuses (1) angeordnet ist und das Bremssystem (3) in einem zweiten Innenvolumen des Gehäuses (1) angeordnet ist, das durch zwei Rollelemente (51, 52) des Lagers (5) abgegrenzt ist, wobei der Einlass (81) für Fluid des Flüssigkeitskühlungssystems in dem ersten Innenvolumen des Gehäuses (1) angeordnet ist und der Auslass (82) für Fluid des Flüssigkeitskühlungssystems in dem zweiten Innenvolumen des Gehäuses (1) angeordnet ist

3. System nach einem der Ansprüche 1 oder 2, wobei der Auslass (82) für Fluid des Flüssigkeitskühlungssystems mit dem Innenvolumen des Gehäuses (1) über einen Kanal verbunden ist, der in dem Bremssystem (3) eingerichtet ist.

4. System nach Anspruch 3, wobei das System zur Steuerung des Bremssystems mindestens einen Kolben (6, 7) umfasst, der dazu ausgestaltet ist, eine Spannkraft auf die Bremsscheiben (31, 34) anzuwenden, wobei der genannten Kolben (6, 7) eine Bohrung (64, 74) derart umfassen, dass ein Durchgang des Fluids des Flüssigkeitskühlungssystems von dem Innenvolumen des Gehäuses (1) hin zu dem Auslass (82) für Fluid erzeugt wird.

5. System nach Anspruch 4, wobei die Bohrung (64, 74) mit einem kalibrierten Ventil (75) versehen ist, das derart ausgestaltet ist, dass es einen Fluiddurchgang hin zu dem Auslass (82) für Fluid nur erlaubt, wenn der Druck im Inneren des Innenvolumens des Gehäuses (1) einen Schwellenwert überschreitet.

6. System nach einem der Ansprüche 4 oder 5, wobei das Gehäuse (1) eine Rille (76) umfasst, die derart ausgestaltet ist, dass sie einen Fluiddurchgang hin zu dem Auslass (82) für Fluid über die Bohrung (74) und eine Nut (83) erlaubt, wenn die Gesamtdicke eines Stapels, der durch die Bremsscheiben (31, 34) gebildet wird, einen Schwellenwert unterschreitet.

7. System nach einem der Ansprüche 3 bis 6, wobei sämtliche oder ein Teil der Bremsscheiben (31, 34) mit Belägen (36) versehen ist/sind, die Aussparungen (37) aufweisen, welche Fluiddurchgänge des Flüssigkeitskühlungssystems von dem Innenvolumen des Gehäuses (1) hin zu dem Auslass (82) für Fluid bilden.

8. System nach einem der Ansprüche 3 bis 7, wobei sämtliche oder ein Teil der Bremsscheiben (31, 34) Beläge (36) aufweist/en, die aus getrennten Bereichen derart gebildet sind, dass Abschnitte (38) ohne Belag gebildet werden und somit Durchgänge für das Fluid zwischen zwei benachbarten Bremsscheiben gebildet werden.

9. System nach einem der Ansprüche 1 bis 8, das einen Druckfühler (9) im Inneren des Gehäuses umfasst, der dazu ausgestaltet ist, den Druck des Fluids des Flüssigkeitskühlungssystems im Inneren des Gehäuses (1) zu bestimmen.

10. System nach Anspruch 9, wobei der Druckfühler (9) dazu ausgestaltet ist, ein Signal zu liefern, wenn der Druck im Inneren des Gehäuses (1) einen Schwellenwert überschreitet.

11. System nach einem der Ansprüche 9 oder 10, wobei der Druckfühler (9) im Inneren eines Innenvolumens des Gehäuses (1) angeordnet ist, das die hydraulische Maschine (2) umfasst.

## Claims

1. A hydraulic apparatus comprising a casing (1) having arranged therein a hydraulic machine (2), a shaft (4) engaged in the casing (1) and mounted to rotate relative to the casing (1) by means of a bearing (5) having at least two rolling elements (51, 52), a braking system (3) having a plurality of brake disks (31, 34) configured to prevent the shaft (4) rotating relative to the casing (1) in selective manner, and a control system (6, 7) for controlling said brake disks (31, 34), the hydraulic system including an irrigation system adapted to cool said brake disks (31, 34) by means of a fluid, the irrigation system including a fluid inlet (81) and a fluid outlet (82), the hydraulic system being **characterized in that** the fluid inlet and outlet (81, 82) of the irrigation system define a fluid flow within the casing in which the braking system (3) is downstream from the hydraulic machine (2).

2. An apparatus according to claim 1, wherein the hydraulic machine (2) is arranged in a first internal volume of the casing (1), and the braking system (3) is arranged in a second internal volume of the casing (1) defined between the two rolling elements (51, 52) of the bearing (5), the fluid inlet (81) of the irrigation system being arranged in the first internal volume of the casing (1) and the fluid outlet (82) of the irrigation system being arranged in the second internal volume of the casing (1).

3. An apparatus according to claim 1 or claim 2, wherein the fluid outlet (82) of the irrigation system is connected to the internal volume of the casing (1) via a channel arranged in the braking system (3).

4. An apparatus according to claim 3, wherein the braking system control system includes at least one piston (6, 7) configured to apply a clamping force on the brake disks (31, 34), said piston (6, 7) including a hole (64, 74) so as to generate a passage for the fluid of the irrigation system from the internal volume of the casing (1) towards the fluid outlet (82).

5. An apparatus according to claim 4, wherein said hole (64, 74) is provided with a rated check valve (75) configured to allow fluid to pass to the fluid outlet (82) only when the pressure within the internal volume of the casing (1) exceeds a threshold value.

6. An apparatus according to claim 4 or claim 5, wherein the casing (1) includes a gap (76) configured to enable fluid to pass towards the fluid outlet (82) via the hole (74) and via a groove (83) when the total thickness of a stack formed by the brake disks (31, 34) passes under a threshold value.

7. An apparatus according to any one of claims 3 to 6, wherein some or all of the brake disks (31, 34) are provided with linings (36) presenting recesses (37) forming passages for fluid of the irrigation system from the internal volume of the casing (1) towards the fluid outlet (82).

8. An apparatus according to any one of claims 3 to 7, wherein some or all of the brake disks (31, 34) present linings (36) formed by disjoint sectors, so as to leave portions (38) having no lining, thereby forming passages for the fluid between two adjacent brake disks.

9. An apparatus according to any one of claims 1 to 8, including a pressure sensor (9) within the casing, and configured to determine the pressure of the fluid of the irrigation system within the casing (1).

10. An apparatus according to claim 9, wherein the pressure sensor (9) is configured to deliver a signal when the pressure within the casing (1) exceeds a threshold value.

11. An apparatus according to claim 9 or claim 10, wherein the pressure sensor (9) is arranged within an internal volume of the casing (1) including the hydraulic machine (2).
